# EUROPEAN PATENT APPLICATION

(11) **EP 3 355 106 A1**
(43) Date of publication of application: **01.08.2018**
(21) Application number: 16781991.1
(22) Date of filing: 16.02.2016
(51) Int. Cl.: G02F 1/1333

(54) **FLEXIBLE LIQUID CRYSTAL DISPLAY PANEL, DISPLAY, WEARABLE DEVICE AND PANEL MANUFACTURING METHOD**

(30) Priority: 24.09.2015 CN 201510617948
(71) Applicant: BOE Technology Group Co., Ltd., Beijing 100015 (CN); Chengdu BOE Optoelectronics Technology Co., Ltd., Chengdu, Sichuan 611731 (CN)
(72) Inventor: XIANG, Xi, Beijing 100176 (CN); ZHANG, Junrui, Beijing 100176 (CN); JIANG, Ni, Beijing 100176 (CN)
(74) Representative: Gesthuysen Patent- und Rechtsanwälte
(86) International application number: PCT/CN2016/073861
(87) International publication number: WO 2017/049850

(57) **Abstract**

The present disclosure describes a flexible liquid crystal display panel and a method of manufacturing the same, a flexible liquid crystal display and a wearable device to reduce impact of the variation in the cell gap of the liquid crystal layer on the display effect and to improve the display quality. The flexible liquid crystal display panel comprises a first flexible substrate and a second flexible substrate arranged in cell alignment, and a liquid crystal layer located between the first flexible substrate and the second flexible substrate. The liquid crystal in the liquid crystal layer has a birefringence Δn₁ <0.045, and the liquid crystal layer has a cell gap d₁> 8 µm, which satisfy the formula Δn₁*d₁=λ₀ where λ₀ is a phase difference when the flexible liquid crystal display panel is not deformed and is a set constant. In the case of the flexible liquid crystal display panel provided by the present disclosure, when the flexible liquid crystal display panel is bent to the same extent as in the prior art, the difference between the phase difference of the bent region of the flexible liquid crystal display panel and the phase difference of the region thereof which is not deformed is smaller, leading to better uniformity of picture.

## Description

### FIELD

The present disclosure relates to the field of display technologies, and specifically to a flexible liquid crystal display panel and a method of manufacturing the same, a flexible liquid crystal display and a wearable device.

### BACKGROUND

In recent years, flexible displays and flexible display technologies have received more and more attention. The flexible displays are displays that can be folded, bent or deformed in other manners. The flexible display technologies make the information display manners more flexible and diverse, which have a wide prospect of application in the fields such as televisions, monitors, mobile phones, tablets, and electronic albums.

The current flexible display technologies mainly include flexible organic electroluminescent display technology, flexible electrophoretic display technology and flexible liquid crystal display technology, wherein the flexible liquid crystal display technology is developed earlier. In a flexible liquid crystal display, the cell gap of the liquid crystal layer has great impact on the displayed image. When the substrate is bent or folded under pressure, the liquid crystal in the folded region will flow to the periphery due to change in the distance between the substrates, such that the cell gap of the liquid crystal layer in the bent region is different from that of the liquid crystal layer in the region which is not deformed, resulting in non-uniform display.

### SUMMARY

The present disclosure proposes a flexible liquid crystal display panel and a method of manufacturing the same, a flexible liquid crystal display and a wearable device, to reduce the impact of the variation in the cell gap of the liquid crystal layer on the display effect and to improve the display quality.

In one aspect of the present disclosure, there is provided a flexible liquid crystal display panel comprising: a first flexible substrate and a second flexible substrate arranged in cell alignment; and a liquid crystal layer located between the first flexible substrate and the second flexible substrate, wherein the liquid crystal in the liquid crystal layer has a birefringence Δn₁<0.045 and the liquid crystal layer has a cell gap d₁>8µm which satisfies the formula Δn₁*d₁=λ₀, where λ₀ is a phase difference when the flexible liquid crystal display panel is not deformed and is a set constant..

When the flexible liquid crystal display panel is bent, the cell gap of the liquid crystal layer will change such that the phase difference is changed, influencing the uniformity of picture. In the case of the flexible liquid crystal display panel provided by the present disclosure, when the flexible liquid crystal display panel is bent to the same extent as in the prior art, the variation in the phase difference of the flexible liquid crystal display panel resulting from the variation in the cell gap of the liquid crystal layer is smaller. That is to say, there is a smaller difference between the phase difference of the bent region of the flexible liquid crystal display panel in the present disclosure and the phase difference of the region thereof which is not deformed, leading to better uniformity of picture. Thus, the displayed picture has higher quality.

Optionally, the birefringence Δn₁ of the liquid crystal in the liquid crystal layer satisfies 0.018<Δn₁<0.045.

Optionally, the cell gap d₁ of the liquid crystal layer satisfies 8µm<d₁<20µm.

Optionally, the birefringence Δn₁ of the liquid crystal in the liquid crystal layer satisfies Δn₁=0.0354, and the cell gap d₁ of the liquid crystal layer satisfies d₁=10µm.

In another aspect of the present disclosure, there is further provided a flexible liquid crystal display comprising the flexible liquid crystal display panel according to the present disclosure.

In the case of the flexible liquid crystal display that employs the flexible liquid crystal display panel according to the present disclosure, when the flexible liquid crystal display panel is bent to the same extent as in the prior art, the variation in the phase difference of the flexible liquid crystal display panel resulting from the variation in the cell gap of the liquid crystal layer is smaller. That is, there is a smaller difference between the phase difference of the bent region of the flexible liquid crystal display panel in the present disclosure and the phase difference of the region thereof which is not deformed, leading to better uniformity of picture. Thus, the flexible liquid crystal display provided by the present disclosure achieves display with higher quality.

In a further aspect of the present disclosure, there is further provided a wearable device comprising the flexible liquid crystal display panel according to the present disclosure.

In the case of the wearable device that employs the flexible liquid crystal display panel provided by the present disclosure, when the flexible liquid crystal display panel is bent to the same extent as in the prior art, the variation in the phase difference of the flexible liquid crystal display panel resulting from the variation in the cell gap of the liquid crystal layer is smaller, leading to better uniformity of picture. Thus, the wearable device provided by the present disclosure achieves display with higher quality.

In yet another aspect of the present disclosure, there is provided a method of manufacturing a flexible liquid crystal display panel, comprising:
forming a first flexible substrate;
forming a second flexible substrate;
dropping liquid crystal on the first flexible substrate and coating a sealant on the second flexible substrate, the liquid crystal having a birefringence Δn₁<0.045;
performing cell alignment for the first flexible substrate and the second flexible substrate, the resulting liquid crystal layer having a cell gap d₁>8 µm which satisfies the formula Δn₁*d₁=λ₀, where λ₀ is a phase difference when the flexible liquid crystal display panel is not deformed and is a set constant.

In the case of a flexible liquid crystal display panel that is manufactured using the method of manufacturing a flexible liquid crystal display panel as provided by the present disclosure, when the flexible liquid crystal display panel is bent to the same extent as in the prior art, the variation in the phase difference of the flexible liquid crystal display panel resulting from the variation in the cell gap of the liquid crystal layer is smaller, leading to better uniformity of picture. Thus, the flexible liquid crystal display panel that is manufactured using the manufacturing method provided by the present disclosure achieves display with higher quality. Optionally, the method of manufacturing a flexible liquid crystal display panel further comprises the birefringence Δn₁ of the liquid crystal in the liquid crystal layer satisfying 0.018<Δn₁<0.045.

Optionally, the method of manufacturing a flexible liquid crystal display panel further comprises the cell gap d₁ of the liquid crystal layer satisfying 8µm<d₁<20µm.

Optionally, the method of manufacturing a flexible liquid crystal display panel further comprises the birefringence Δn₁ of the liquid crystal satisfying Δn₁=0.0354, and the cell gap d₁ of the liquid crystal layer satisfying d₁=10µm.

### BRIEF DESCRIPTION OF THE DRAWINGS

Fig. 1 is a structural schematic diagram of a flexible liquid crystal display panel in the prior art;
Fig. 2 is a structural schematic diagram of a flexible liquid crystal display panel according to an embodiment of the present disclosure;
Fig. 3 is a schematic comparison diagram for voltage-transmittance curves of the liquid crystal panels according to the prior art and the embodiment of the present disclosure which vary with the cell gap;
Figs. 4a-4c are schematic comparison diagrams for the viewing angles of the liquid crystal panel in the prior art which vary with the cell gap;
Figs. 4d-4f are schematic comparison diagrams for the viewing angles of the liquid crystal panel according to the embodiment of the present disclosure which vary with the cell gap;
Fig. 5 is a flow chart of a method of manufacturing a flexible liquid crystal display panel according to the embodiment of the present disclosure.

### DETAILED DESCRIPTION

Reference signs: 1 - first flexible substrate; 2 - dashed line-I; 3 - second flexible substrate; 4 - dashed line-II; 5, 7 - liquid crystal; 6 - sealant; 8 - curve-I; 9 - curve-II; 10 - curve-III; 11 - curve-IV; 12 - curve-V; 13 - curve-VI.

To improve the display quality, the present disclosure provides a flexible liquid crystal display panel, a flexible liquid crystal display, a wearable device and a method of manufacturing a flexible liquid crystal display panel. In the case of the flexible liquid crystal display panel provided by the present disclosure, when the flexible liquid crystal display panel is bent to the same extent as those in the prior art, the variation in the phase difference of the flexible liquid crystal display panel resulting from the variation in the cell gap is smaller. That is to say, the difference between the phase difference of the bent region of the flexible liquid crystal display panel provided by the present disclosure and the phase difference of the region thereof which is not deformed is smaller than the difference occurring in the existing flexible liquid crystal display panel, leading to better uniformity of picture, thus achieving a display picture with higher quality. Therefore, as compared to the prior art, the technical solution of the present disclosure can reduce the impact of the variation in the cell gap of the liquid crystal layer on the display effect and thereby improve the display quality.

In order to make the objective, technical solutions and advantages of the present disclosure clearer, the present disclosure is further described in detail by means of the following embodiments.

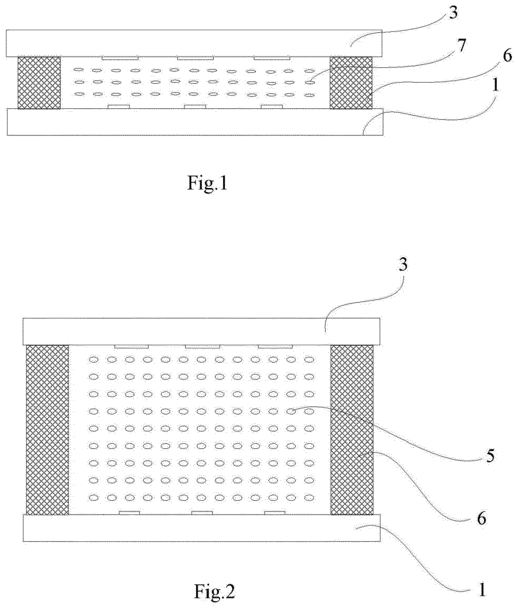

As shown in Fig. 2, the flexible liquid crystal display panel according to an embodiment of the present disclosure includes a first flexible substrate 1 and a second flexible substrate 3 arranged in cell alignment, and a liquid crystal layer located between the first flexible substrate 1 and the second flexible substrate 3. A liquid crystal 7 in the liquid crystal layer has a birefringence Δn₁<0.045 and the liquid crystal layer has a cell gap d₁>8µm, which satisfy the formula Δn₁*d₁=λ₀ where λ₀ is a phase difference when the flexible liquid crystal display panel is not deformed and is a pre-set constant.

As shown in Fig. 2, in the flexible liquid crystal display panel according to the embodiment of the present disclosure, a sealant 6 is located between the first flexible substrate 1 and the second flexible substrate 3, and the liquid crystal 7 is filled in a sealed cell-like structure consisting of the first flexible substrate 1, the second flexible substrate 3 and the sealant.

Usually, for panel manufacturers, the phase difference when the flexible liquid crystal display panel is not deformed is a fixed value which generally ranges between 330 and 370nm and can be determined based on experiences and practical needs. The existing flexible liquid crystal display panels typically employ a liquid crystal having a birefringence of 0.08 to 0.15, and the cell gap of the liquid crystal layer is designed to be 2.5 to 5µm.

In the liquid crystal display device, the product d*Δn of the birefringence Δn of the liquid crystal and the cell gap d of the liquid crystal layer of the liquid crystal display panel is equal to the phase difference λ. When the flexible liquid crystal display panel is bent, the cell gap d of the liquid crystal layer would change, thus the phase difference λ also changes accordingly.

Fig. 1 is a schematic view of a flexible liquid crystal display panel in the prior art. It is assumed that a liquid crystal 7 used in the existing flexible liquid crystal display panel has a birefringence Δn₂ and a liquid crystal layer of the existing flexible liquid crystal display panel has a cell gap d₂.

Fig. 2 is a schematic view of the flexible liquid crystal display panel according to the embodiment of the present disclosure, wherein a liquid crystal 5 used in the flexible liquid crystal display panel has a birefringence Δn₁, wherein Δn₁<Δn₂.

Assuming that the amount of variation in the cell gap of the liquid crystal layer at a certain position is Δd when the flexible liquid crystal display panel is bent, the amount of variation in the phase difference of the existing flexible liquid crystal display panel is Δλ₂=Δd*Δn₂, and the amount of variation in the phase difference of the flexible liquid crystal display panel proposed by the embodiment of the present disclosure is Δλ₁=Δd*Δn₁. Δλ₁<Δλ₂ because of Δn₁<Δn₂. That is, when the display panels are bent to the same extent, the variation in the phase difference of the flexible liquid crystal display panel proposed by the embodiment of the present disclosure resulting from the variation in the cell gap is smaller. That is to say, there is a smaller difference between the phase difference of the bent region of the flexible liquid crystal display panel in the embodiment of the present disclosure and the phase difference of the region thereof which is not deformed, leading to better uniformity of picture. Thus, the displayed picture has higher quality.

The specific values of the birefringence of the liquid crystal in the liquid crystal layer and the cell gap of the liquid crystal layer are not limited and can be determined based on practical needs in combination with experiences. In an alternative embodiment of the present disclosure, the birefringence Δn₁ of the liquid crystal in the liquid crystal layer satisfies 0.018<Δn₁<0.045 and the cell gap d1 of the liquid crystal layer satisfies 8µm<d₁<20µm.

For example, in an optional embodiment of the present disclosure, the birefringence Δn₁ of the liquid crystal in the liquid crystal layer is 0.0354, and the cell gap d₁ of the liquid crystal layer is 10 µm. In this embodiment, the value of the phase difference λ₀ is 354 nm.

In order to compare different optical performances of the technical solutions in the prior art and those according to the embodiment of the present disclosure, for the prior art solution in which d₂=3.6µm, Δn₂=0.0984 and the embodiment of the present disclosure in which d₁=10µm, Δn₁=0.0354, the variations in transmittance, central contrast and viewing angle performance, and color coordinates are simulated, respectively when the cell gap is increased by Δd=0.4µm and the cell gap is decreased by Δd=-0.4µm.

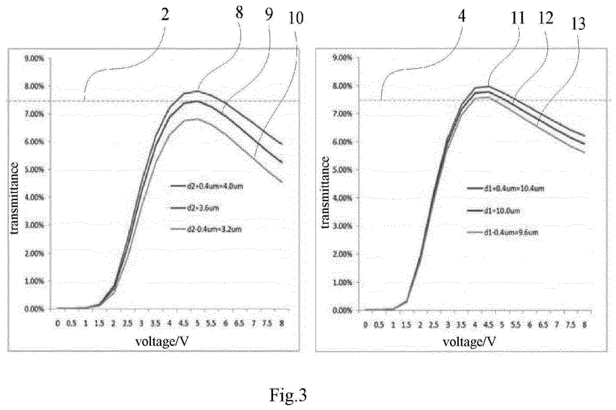

As shown in Fig. 3, the left view in Fig. 3 illustrates a voltage-transmittance curve that varies with the cell gap in the prior art solution, wherein curve-I 8 is a curve when the cell gap is 4.0 µm, curve-II 9 is a curve when the cell gap is 3.6 µm, and curve-III 10 is a curve when the cell gap is 3.2 µm. The right view in Fig. 3 illustrates a voltage-transmittance curve that varies with the cell gap in the technical solution in the embodiment of the present disclosure, wherein curve-IV 11 is a curve when the cell gap is 10.4 µm, curve-V 12 is a curve when the cell gap is 10 µm, and curve-VI 13 is a curve when the cell gap is 9.6 µm.

In the prior art, the maximum value of the liquid crystal transmittance is 7.5% when the cell gap is 3.6 µm and the voltage between the liquid crystal cells is 4.5-5.5 V. In the left and right views of Fig. 3, a dashed line-I 2 and a dashed line-II 4 which are parallel to the abscissa and have an ordinate of 7.5% are taken as reference lines. It can be seen that the increment in transmittance in the technical solution of the embodiment of the present disclosure is smaller when the cell gap is increased by 0.4 µm, and the decrement in transmittance in the technical solution of the embodiment of the present disclosure is also smaller when the cell gap is decreased by 0.4 µm. Moreover, the technical solution of the embodiment of the present disclosure can achieve a higher transmittance at a lower voltage as compared to the prior art.

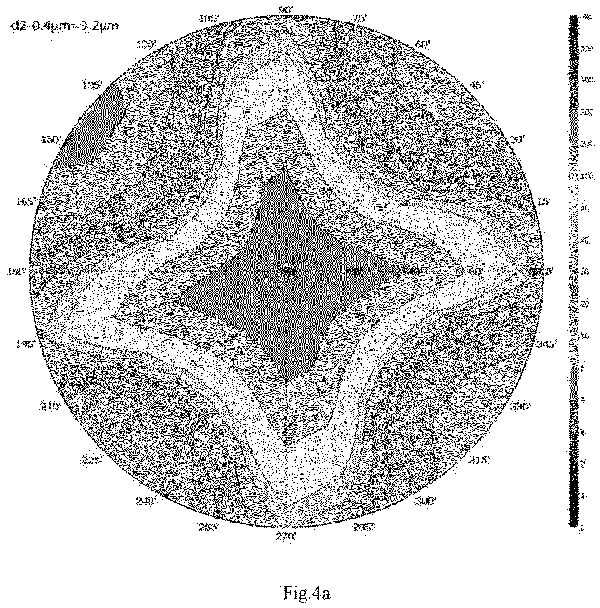

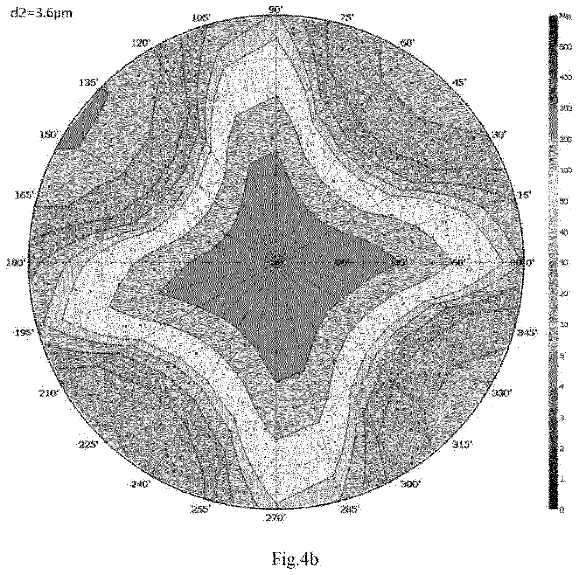

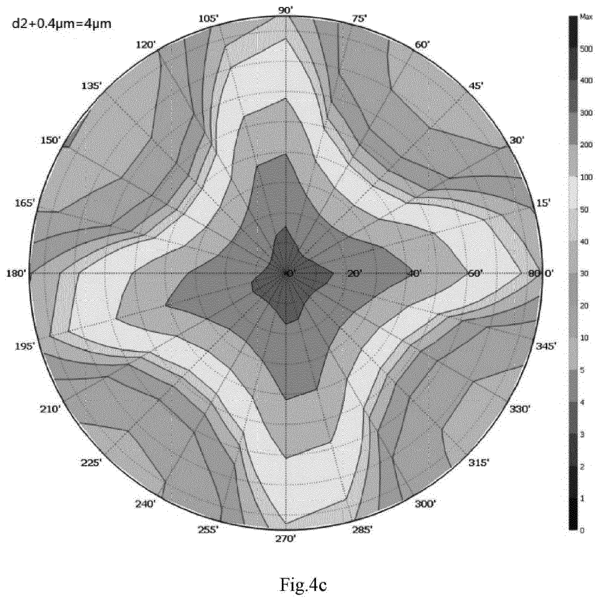

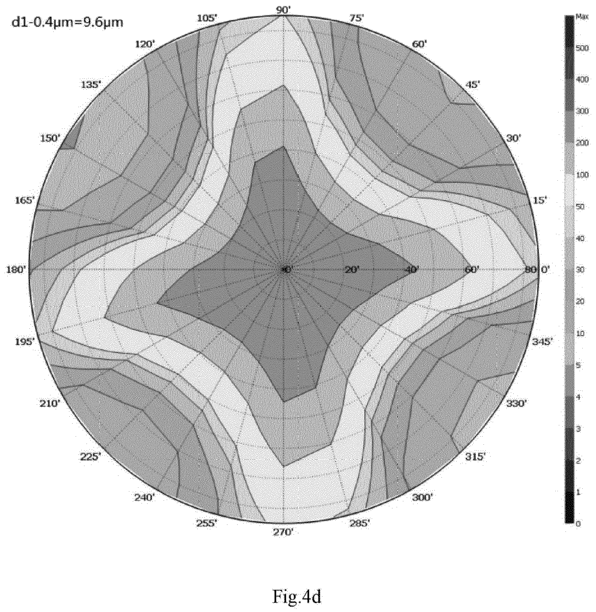

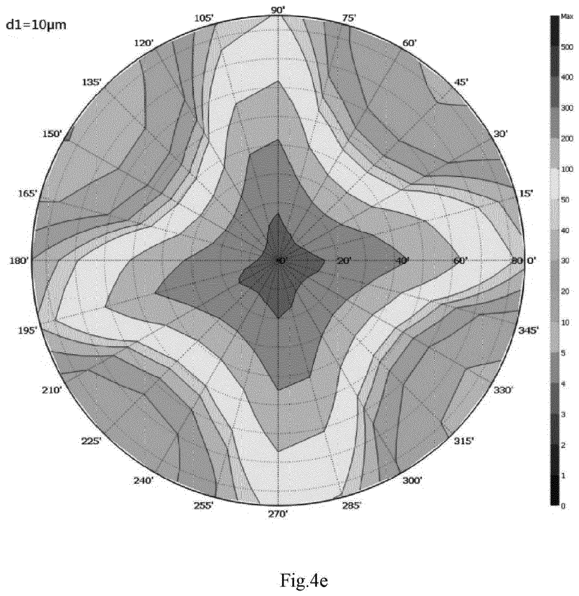

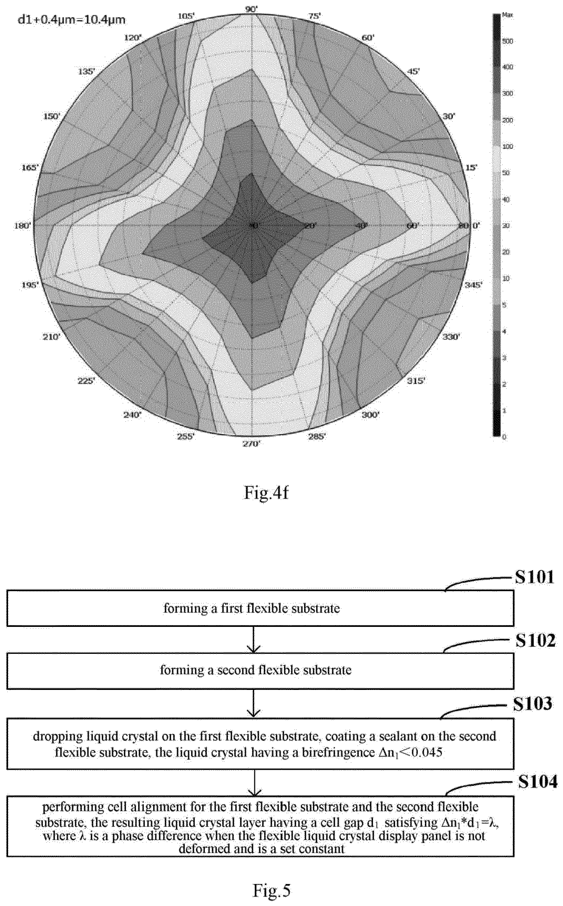

The contrast and viewing angle performance of the flexible liquid crystal display panel in the embodiment of the present disclosure and the flexible liquid crystal display panel in the prior art are shown in Figs. 4a to 4f, wherein Figs. 4a to 4c are equal contrast curves for the flexible liquid crystal display panel in the prior art which are obtained by observation under different viewing angles in the case of different cell gaps, and Figs. 4d to 4f are equal contrast curves for the flexible liquid crystal display panel according to the embodiment of the present disclosure which are obtained by observation under different viewing angles in the case of different cell gaps. In Figs. 4a to 4f, the areas between different curves are marked with contrast in color depth, and the contrast gradually deteriorates from the center of a circle to the outside. For example, when d₁ is 10 µm, the highest contrast of the flexible liquid crystal display panel in the embodiment of the present disclosure is 300 to 400. As compared to the prior art, the flexible liquid crystal display panel in the technical solution of the embodiment of the present disclosure not only has higher contrast and but also has better viewing angle performance; meanwhile, the increment in the contrast in the technical solution proposed in the embodiment of the present disclosure is smaller when the cell gap is also increased by 0.4 µm, and the decrement in the contrast in the technical solutions proposed in the embodiment of the present disclosure is also smaller when the cell gap is also decreased by 0.4 µm.

In Table 1 and Table 2 below, Rx and Ry are color coordinates of red color displayed on the liquid crystal display panel. As shown in Table 1, when the liquid crystal cell gap in the prior art is changed from 3.6 µm to 3.2 µm, the color coordinate Rx of red color is increased by 0.0019; when the liquid crystal cell gap is changed from 3.6 µm to 4.0 µm, the color coordinate Rx of red color is reduced by 0.0019. As shown in Table 2, when the liquid crystal cell gap in the embodiment of the present disclosure is changed from 10 µm to 9.6 µm, the color coordinate Rx of red color is increased by 0.0006; when the liquid crystal cell gap is changed from 10 µm to 10.4 µm, the color coordinate Rx of red color is reduced by 0.0006. The variation of Ry is similar to that of Rx. Therefore, as compared to the prior art, the variation in color coordinates of red color is smaller when the flexible liquid crystal display panel in the embodiment of the present disclosure is also changed by 0.4 µm. The color coordinates (Gx, Gy, Bx, By, Wx, Wy) of other colors vary in a similar manner to red color. Therefore, in terms of the variation in color coordinates, when the cell gap is changed by the same amount of 0.4 µm or -0.4 µm, the extent of variation in the color coordinates of the flexible liquid crystal display panel in the technical solution proposed in the embodiment of the present disclosure is significantly smaller as compared to the prior art.

In conclusion, when the same variation occurs in the cell gap, as compared to the prior art, the flexible liquid crystal display in the embodiment of the present disclosure has smaller variations in the transmittance, contrast and color coordinates, and has superior performance in terms of optical characteristics such as transmittance, contrast and the like. Consequently, by using the flexible liquid crystal display panel provided by the embodiment of the present disclosure, display with higher quality can be achieved.

**Table 1, which shows variations in color coordinates of the existing flexible liquid crystal display panel with the cell gap**

| | d2=3.6µm | d2-0.4µm= 3.2µm | Amount of variation Δ in color coordinates | d2+0.4µm= 4.0µm | Amount of variation Δ in color coordinates |
|---|---|---|---|---|---|
| Rx | 0.6586 | 0.6567 | 0.0019 | 0.6605 | -0.0019 |
| Ry | 0.3246 | 0.3243 | 0.0003 | 0.3249 | -0.0003 |
| Gx | 0.2977 | 0.2939 | 0.0038 | 0.3019 | -0.0042 |
| Gy | 0.5951 | 0.5947 | 0.0004 | 0.5953 | -0.0002 |
| Bx | 0.1385 | 0.1391 | -0.0006 | 0.1383 | 0.0002 |
| By | 0.1319 | 0.1266 | 0.0053 | 0.1358 | -0.0039 |
| Wx | 0.3236 | 0.3142 | 0.0094 | 0.3336 | -0.0100 |
| Wy | 0.351 | 0.343 | 0.0080 | 0.3579 | -0.0069 |

**Table 2, which shows variations in color coordinates of the display panel according to the embodiment of the present disclosure with the cell gap**

| | d1=10.0µm | d1-0.4µm= 9.6µm | Amount of variation Δ in color coordinates | d1+0.4µm =10.4µm | Amount of variation Δ in color coordinates |
|---|---|---|---|---|---|
| Rx | 0.6585 | 0.6579 | 0.0006 | 0.6591 | -0.0006 |
| Ry | 0.3245 | 0.3244 | 0.0001 | 0.3246 | -0.0001 |
| Gx | 0.2962 | 0.2951 | 0.0011 | 0.2974 | -0.0012 |
| Gy | 0.5949 | 0.5948 | 0.0001 | 0.595 | -0.0001 |
| Bx | 0.1388 | 0.1389 | -0.0001 | 0.1388 | 0.0000 |
| By | 0.1293 | 0.1278 | 0.0015 | 0.1288 | 0.0005 |
| Wx | 0.3201 | 0.3173 | 0.0028 | 0.3229 | -0.0028 |
| Wy | 0.3474 | 0.3451 | 0.0023 | 0.3488 | -0.0014 |

In the case of the flexible liquid crystal display panel provided by the embodiment of the present disclosure, when the flexible liquid crystal display panel is bent to the same extent as in the prior art, the variation in the phase difference of the flexible liquid crystal display panel resulting from the variation in cell gap is smaller. That is to say, the difference between the phase difference of the bent region of the flexible liquid crystal display panel in the embodiment the present disclosure and the phase difference of the region thereof which is not deformed is smaller than the difference occurring in the existing flexible liquid crystal display panel, leading to better uniformity of picture. Thus, the displayed picture has higher quality.

The present disclosure further provides a flexible liquid crystal display comprising the flexible liquid crystal display panel according to the above embodiment of the present disclosure.

In the case of the flexible liquid crystal display that employs the flexible liquid crystal display panel according to the embodiment of the present disclosure, when the flexible liquid crystal display panel is bent to the same extent as in the prior art, the variation in the phase difference of the flexible liquid crystal display panel resulting from the variation in cell gap is smaller. That is to say, the difference between the phase difference of the bent region of the flexible liquid crystal display panel in the embodiment the present disclosure and the phase difference of the region thereof which is not deformed is smaller than the difference occurring in the existing flexible liquid crystal display panel, leading to better uniformity of picture. Thus, the picture displayed by the flexible liquid crystal display provided by the embodiment of the present disclosure has higher quality.

The present disclosure further provides a wearable device comprising the flexible liquid crystal display panel provided by the above embodiment of the present disclosure. The specific type of the wearable device is not limited, and may be, for example, an intelligent wristband, a smart watch, or the like.

In the case of the wearable device that employs the flexible liquid crystal display panel according to the embodiment of the present disclosure, when the flexible liquid crystal display panel is bent to the same extent as in the prior art, the variation in the phase difference of the flexible liquid crystal display panel resulting from the variation in cell gap is smaller, leading to better uniformity of picture. Thus, the picture displayed by the wearable device provided by the embodiment of the present disclosure has higher quality.

The present disclosure further provide a method of manufacturing a flexible liquid crystal display panel comprising, as shown in Fig. 5,
Step S101: forming a first flexible substrate;
Step S102: forming a second flexible substrate;
Step S103: dropping liquid crystal on the first flexible substrate, coating a sealant on the second flexible substrate, the liquid crystal having a birefringence Δn₁<0.045;
Step S104: performing cell alignment for the first flexible substrate and the second flexible substrate, the resulting liquid crystal layer having a cell gap d₁>8µm which satisfies the formula Δn₁*d₁=λ₀, where λ₀ is a phase difference when the flexible liquid crystal display panel is not deformed and is a set constant.

In the case of the flexible liquid crystal display panel that is manufactured using the above method of manufacturing a flexible liquid crystal display panel, when the flexible liquid crystal display panel is bent to the same extent as in the prior art, the variation in the phase difference of the flexible liquid crystal display panel resulting from the variation in cell gap is smaller, leading to better uniformity of picture. Thus, the flexible liquid crystal display panel that is manufactured using the above manufacturing method achieves display with higher quality.

The method of manufacturing a flexible liquid crystal display panel as provided above further comprises the birefringence Δn₁ of the liquid crystal in the liquid crystal layer satisfying 0.018<Δn₁<0.045.

The method of manufacturing a flexible liquid crystal display panel as provided above further comprises the cell gap d₁ of the liquid crystal layer satisfying 8µm<d₁<20µm.

The method of manufacturing a flexible liquid crystal display panel as provided above further comprises the birefringence Δn₁ of the liquid crystal satisfying Δn₁=0.0354, and the cell gap d₁ of the liquid crystal layer satisfying d₁=10µm.

Obviously, those skilled in the art can make various modifications and variations to the embodiments of the present disclosure without departing from the spirit and scope thereof. In this way, if these modifications and variations to the embodiments of the present disclosure pertain to the scope of the claims of the present disclosure and equivalent technologies thereof, the present disclosure also intends to encompass these modifications and variations.

## Claims

1. A flexible liquid crystal display panel comprising: a first flexible substrate and a second flexible substrate arranged in cell alignment; and a liquid crystal layer located between the first flexible substrate and the second flexible substrate, wherein the liquid crystal in the liquid crystal layer has a birefringence Δn₁<0.045 and the liquid crystal layer has a cell gap d₁>8µm which satisfies the formula Δn₁*d₁=λ₀, where λ₀ is a phase difference when the flexible liquid crystal display panel is not deformed and is a set constant.

2. The flexible liquid crystal display panel according to claim 1, wherein the birefringence Δn₁ of the liquid crystal in the liquid crystal layer satisfies 0.018<Δn₁<0.045.

3. The flexible liquid crystal display panel according to claim 1, wherein the cell gap d₁ of the liquid crystal layer satisfies 8µm<d₁<20µm.

4. The flexible liquid crystal display panel according to claim 1, wherein the birefringence Δn₁ of the liquid crystal in the liquid crystal layer is 0.0354, and the cell gap d₁ of the liquid crystal layer is 10µm.

5. A flexible liquid crystal display comprising the flexible liquid crystal display panel according to any one of claims 1 to 4.

6. A wearable device comprising the flexible liquid crystal display panel according to any one of claims 1 to 4.

7. A method of manufacturing a flexible liquid crystal display panel, comprising:
forming a first flexible substrate;
forming a second flexible substrate;
dropping liquid crystal on the first flexible substrate and coating a sealant on the second flexible substrate, the liquid crystal having a birefringence Δn₁<0.045;
performing cell alignment for the first flexible substrate and the second flexible substrate, the resulting liquid crystal layer having a cell gap d₁> 8 µm which satisfies the formula Δn₁*d₁=λ₀, where λ₀ is a phase difference when the flexible liquid crystal display panel is not deformed and is a set constant.

8. The method of manufacturing a flexible liquid crystal display panel according to claim 7, wherein the birefringence Δn₁ of the liquid crystal in the liquid crystal layer satisfies 0.018<Δn₁<0.045.

9. The method of manufacturing a flexible liquid crystal display panel according to claim 7, wherein the cell gap d₁ of the liquid crystal layer satisfies 8µm<d₁<20µm.

10. The method of manufacturing a flexible liquid crystal display panel according to claim 7, wherein the birefringence Δn₁ of the liquid crystal is 0.0354, and the cell gap d₁ of the liquid crystal layer is 10 µm.
